# EUROPEAN PATENT APPLICATION

(11) **EP 2 437 501 A2**
(43) Date of publication of application: **04.04.2012**
(21) Application number: 10780760.4
(22) Date of filing: 25.05.2010
(51) Int. Cl.: H04N 13/00, H04N 13/02

(54) **IMAGE-PROCESSING METHOD AND APPARATUS**

(30) Priority: 27.05.2009 US 181455 P; 03.06.2009 US 183612 P; 12.05.2010 KR 20100044500
(71) Applicant: Samsung Electronics Co., Ltd., Suwon-si, Gyeonggi-do 442-742 (KR)
(72) Inventor: JUN, Hye-Young, Hwaseong-si Gyeonggi-do 445-787 (KR); CHUNG, Hyun-Kwon, Seoul 156-030 (KR); LEE, Dae-Jong, Suwon-si Gyeonggi-do 443-717 (KR)
(74) Representative: Waddington, Richard
(86) International application number: PCT/KR2010/003296
(87) International publication number: WO 2010/137849

(57) **Abstract**

An image processing method includes: extracting video depth information indicating a depth of a 3D video image from a video stream; and adjusting a depth value of a graphic screen being synchronized with the 3D video image, by using the video depth information.

## Description

### TECHNICAL FIELD

The present invention relates to a method and apparatus for processing an image, and more particularly, to a method and apparatus for processing an image to adjust a depth value of a graphic screen that is to be reproduces it 3-dimensional (3D) image using a depth value of a 3D video image.

### BACKGROUND ART

Technology to reproduce a video image in a 3-dimensional (3D) image has become widely available with the development of digital technology.

The 3D video image may be displayed with a graphic element, such as a menu or a subtitle additionally provided with a video image. The graphic element reproduced with the 3D video image may be reproduced in 2-dimension (2D) or 3D.

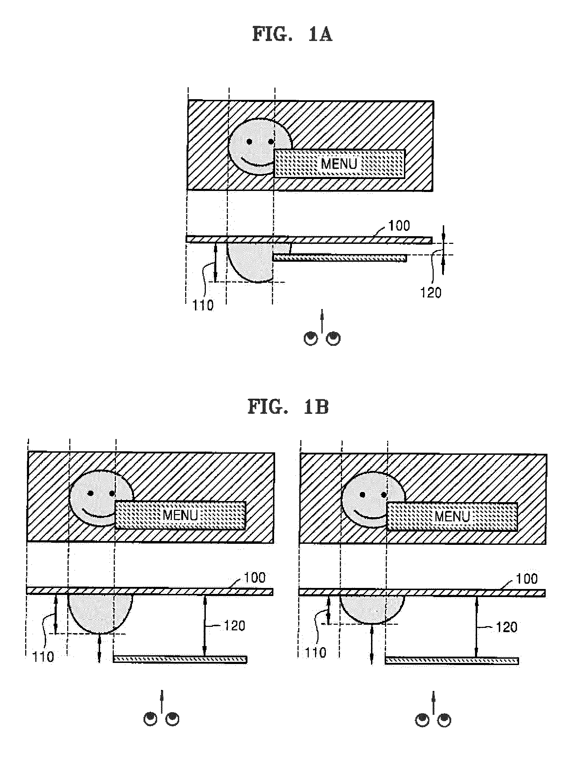

FIGS. 1A and 1B are diagrams for explaining depth values of video image and a graphic element when the video image and the graphic element are reproduced in 3D. The video image may include one or more objects. In FIGS. 1A and 1B, an object is included in the video image.

When a protrusion from a screen 100 is referred to as a depth value, referring to FIG. 1A, a depth value 11 of the object included in the video image is greater than a depth value 120 of the graphic element and thus the object appears to protrude more from the screen 100 than the graphic element. In this case, a viewer who sees the screen 100 recognizes that the menu, i.e. the graphic element, is disposed more inward than the object included in the video image. The graphic element is disposed more inward than the object included in the video image and thus the object is partly hidden by the graphic element. In this case, the viewer recognizes that the object and the graphic element are reproduced unnaturally.

Referring to FIG. 1B, the depth value 120 of the graphic element remains unchanged, and the depth value 11 of the object included in the video image reproduced with the graphic element varies, In general, the depth value 120 of the graphic element has a fixed value or varies with respect to a specific time. Meanwhile, the depth value 11 of the object included in the video image reproduced with the graphic element halving the fixed depth value varies.

It is assumed that the depth value 110 of the object included in the video image of a left frame and a right frame differs, whereas the depth value 120 of the graphic element of the left frame and the right frame is the same. A difference in the depth value 110 of the object included in the video image and the depth value 120 of the graphic element of the left frame is greater than a difference in the depth value 110 of the object and the depth value 120 of the graphic element of the right frame. When the left frame and the right frame are sequentially reproduced, the differences in the depth value 110 of the object included in the video image and the depth value 120 of the graphic element of the left frame and the right frame also vary. The viewer may feel disorientated due to the differences in the depth value 110 of the object included in the video image and the depth value 120 of the graphic element.

### DETAILED DESCRIPTION OF THE INVENTION

### TECHNICAL PROBLEM

The present invention provides a method and apparatus for processing an image, which adjusts a depth value of a graphic screen using a depth value of a video image to allow a viewer to recognize natural reproduction of a video image and a graphic screen.

The present invention also provides a method and apparatus for processing an image, which reproduces a video image and a graphic screen together by providing a 3-dimensional (3D) effect in which the video image is disposed more inward than the graphic screen.

### TECHNICAL SOLUTION

According to an aspect of the present invention, there is provided an image processing method including: extracting video depth information indicating a depth of a 3D video image from a video stream; and adjusting a depth value of a graphic screen being synchronized with the 3D video image, by using the video depth information.

The video depth information may include depth values of the 3D video image or pixel movement distance values corresponding to the depth values of the 3D video image, wherein the depth values increase from an inside of a screen to an outside of a screen on which a video image is output, wherein the adjusting of the depth value of the graphic screen includes: adjusting the depth value of the graphic screen to be equal to or greater than the depth values of the 3D video image.

If the 3D video image includes a plurality of objects, and the video depth information includes depth information regarding two or more of the plurality of objects, the adjusting of the depth value of the graphic screen includes: adjusting the depth value of the graphic screen to be equal to or greater than a depth value of an object having the greatest depth value among the two or more objects.

The video stream may include a plurality of access units that are decoding units, wherein the extracting of the video depth information includes: extracting the video depth information from each of the plurality of access units.

The adjusting of the depth value of the graphic screen may include: adjusting the depth value of the graphic screen being synchronized with the plurality of access units from which the video depth information is extracted using the extracted video depth information.

The extracting of the video depth information may include: extracting the video depth information from user data supplemental enhancement information (SEI) messages included in the SEI of the plurality of access units.

The video stream may include one or more groups of pictures (GOPS) inducing a plurality of access units that are decoding units, wherein the extracting of the video depth information includes: extracting the video depth information from one of the plurality of access units included in the one or more GOPS.

The extracting of the video depth information may include: extracting the video depth information from user data SEI messages included in the SEI of one of the plurality of access units.

The video depth information may include the number of the depth values of the 3D video image or the number of the corresponding pixel movement distance values, wherein the adjusting of the depth value of the graphic screen includes: when the plurality of access units included in the one or more GOPs are divided into groups by the number included in the video depth information, adjusting the depth value of the graphic screen being synchronized with the plurality of access units included in each group, by using one of the depth values of the 3D video image included in the video depth information or one of the corresponding pixel movement distance values.

According to another aspect of the present invention, there is provided an image processing apparatus including: a video decoder for decoding a video stream and generating a left eye image and a right eye image; a graphic decoder for decoding a graphic stream and generating a graphic screen; a video depth information extraction unit for extracting video depth information indicating a depth of a 3D video image from the video stream; and a graphic screen depth value adjusting unit for adjusting a depth value of the graphic screen that is reproduced after being synchronized with the 3D video image, by using the video depth information.

According to another aspect of the present invention, there is provided a non-transitory computer readable recording medium having recorded thereon a program for executing an image processing method, the image processing method including: extracting video depth information indicating a depth of a 3D video image from a video stream; and adjusting a depth value of a graphic screen being synchronized with the 3D video image, by using the video depth information.

### ADVANTAGEOUS EFFECTS

According to the present invention, a depth value of a video image is used to adjust a depth value of a graphic screen and simultaneously reproduce the graphic screen having an adjusted depth value and the video image.

According to the present invention, a video image and a graphic screen are simultaneously reproduced by providing a 3D effect in which the video image is disposed more inward than the graphic screen.

### DESCRIPTION OF THE DRAWINGS

The above and other features and advantages of the present invention will become more apparent by describing in detail exemplary embodiments thereof with reference to the attached drawings in which:
FIGS. 1A and 1B are diagrams for explaining depth values of a video image and a graphic element when the video image and the graphic element are reproduced 3-dimensionally (3D);
FIG. 2 is a block diagram of a video stream according to an embodiment of the present invention;
FIG. 3 is a block diagram of a video stream according to another embodiment of the present invention;
FIG. 4 is a block diagram of a video stream according to another embodiment of the present invention;
FIGS. 5A and 5B are tables of a syntax presenting video depth information included in a supplemental enhancement information (SEI) message, according to an embodiment of the present invention;
FIG. 6 is a block diagram of an image processing apparatus according to an embodiment of the present invention; and
FIG. 7 is a flowchart illustrating an image processing method, according to an embodiment of the present invention.

### BEST MODE

Hereinafter, the present invention will be described more fully with reference to the accompanying drawings, in which exemplary embodiments of the invention are shown.

Expressions such as "at least one of," when preceding a list of elements, modify the entire list of elements and do not modify the individual elements of the list.

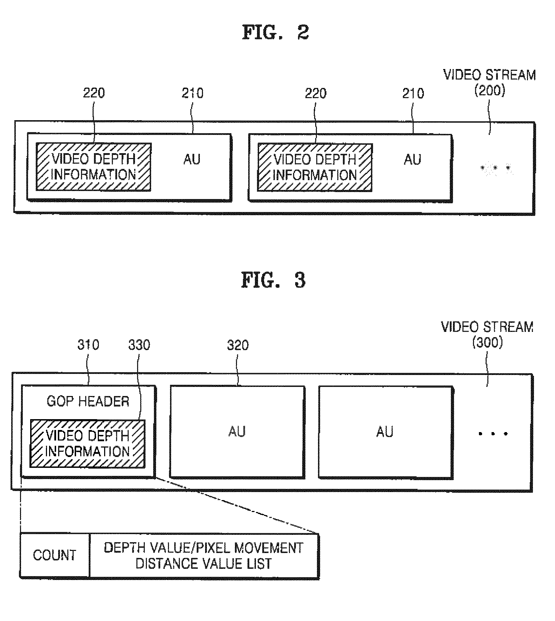

FIG. 2 is a block diagram illustrating an example of a video stream 200. Referring to FIG. 2, the video stream 200 includes one or more access units (AUs) 210. The AUs 210 are a set of network abstraction layer (NAL) units to access information within a bit sequence in a picture unit. That is, an AU corresponds to a coded picture, that is, a picture of a frame, in an encoding/decoding unit.

The video stream 200 includes video depth information 220 for each AU 210. The video depth information 220 is information indicating a depth of a 3-dimensional (3D) video image generated from the video scream 200.

Because a person's eyes are spaced apart from each other by a predetermined distance in a horizontal direction, a 2- dimensional (2D) image viewed by a left eye and a right eye differs. The brain combines the different 2D images to generate a 3D image having perspective and an apparent presence. Thus, in order to reproduce a 2D video image as a 3D image, two different images, one viewed by the left eye (a left eye image) and another by the right eye (a right eye image) with respect to a 2D image, are generated from the 2D image, and the left eye image and the right eye image are alternately reproduced.

The left eye image and the right eye image are generated by moving pixels included in the 2D image at a predetermined distance left or right. A distance, by which pixels move to reproduce the left eye image and the right eye image from the 2D image, varies according to a depth of the 3D image to be generated from the 2D image. Such distance may be between a location of a predetermined pixel in the 2D image and a point of the left eye image and the right eye image to which the predetermined pixel is mapped after moving by a predetermined distance. The term "depth information" may be used to indicate a depth of an image. The video depth information may include a depth value or a movement distance value of a pixel corresponding to the depth value.

In one general aspect, the closer to the viewer an image is disposed, the greater a depth value of the image becomes. According to an illustrative example, the depth value may have one of 256 values from 0 to 255. The farther an image is formed inside a screen from the viewer seeing the screen, the smaller the depth value becomes and, thus, the depth value is closer to 0. The closer to the viewer the image protrudes from the screen, the greater the depth value becomes and, thus, the depth value is closer to 255.

The illustrative example may include the video depth information 220 indicating a depth of the 3D video image to be reproduced from each AU 210 included in the video stream 200.

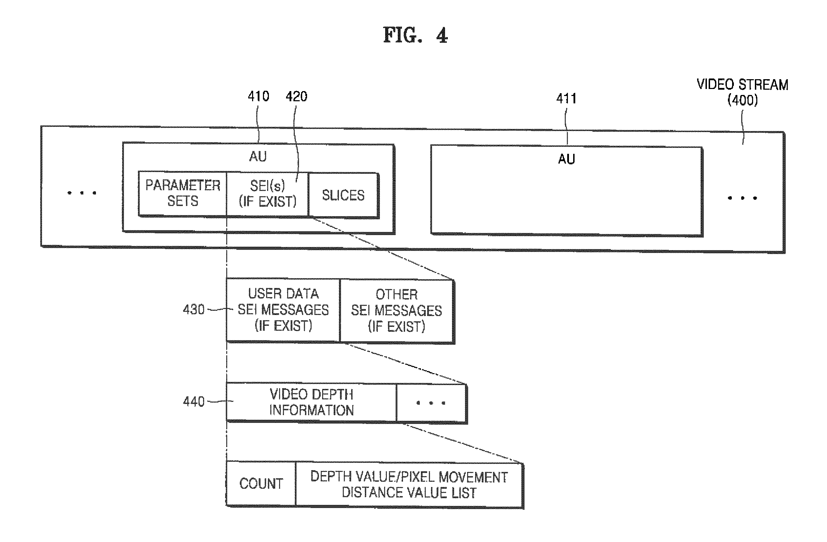

Although not shown in FIG. 2, each AU 210 may include supplemental enhancement information (SEI) that may includes user data SEI messages. The video depth information 220 may be included in the SEI message included in each AU 21-. This will be described in more detail with reference to FIG. 4.

An image processing apparatus (not shown) may extract the video depth information 220 from each AU 210 of the video stream 200 and may adjust a depth value of a graphic screen, using the extracted video depth information 220.

The graphic screen is generated by decoding a graphic stream. The graphic stream may include one or a combination of a presentation graphic stream or a text subtitle stream to provide a subtitle, an interactive graphic stream to provide a menu formed of buttons or the like to interact with a user, or a graphical overlay displayed by a program element, such as Java.

The image processing apparatus may adjust the depth value of the graphic screen to be synchronized with the AUs 210 from which the video depth information 220 is extracted, using the extracted video depth information 220. For example, the graphic screen may be reproduced with 3D image corresponding to the AUs 210, and the image processing apparatus may adjust the depth value of the reproduced graphic screen being synchronized with the AUs 210 from which the video depth information 220 is extracted, using the extracted video depth information 220. The image processing apparatus may adjust the depth value of the graphic screen to be equal to or greater than a depth value of the 3D video image using the depth value included in the video depth information 220 or the movement distance value of the pixel corresponding to the depth value. In this case, the graphic screen protrudes more than the 3D video image and, thus, is output at a location closer to the viewer.

One frame or picture may include one object or a plurality of objects. In this case, the video depth information 220 may include depth information regarding one or all of the plurality of objects or two or more thereof. The image processing apparatus may adjust the depth value of the graphic screen using the depth information regarding one object among the depth information of the objects included in the video depth information 220.

If the depth information of the objects included in the video depth information 220 includes depth values of the objects, the image processing apparatus may adjust the depth value of the graphic screen to be greater than the greatest depth value of one of the objects.

If the video depth information 220 includes a movement distance value of a pixel of each object instead of the depth values of the objects, the image processing apparatus may obtain a depth value corresponding to the movement distance value of the pixel. The image processing apparatus may also identify one of the objects having the greatest depth value, and adjust the depth value of the graphic screen to be greater than the greatest depth value of the identified object.

As described above, according to an illustrative example, the video depth information 220 to adjust the depth value of the graphic screen reproduced with the video image may be included in each AU 210.

FIG. 3 is a block diagram illustrating an example of a video stream 300. Referring to FIG. 3, the video stream 300 may include one or more group of pictures (GOPs) that includes a set of a series of pictures. The video stream 300 may also include a GOP heater 310 for each GOP. The GOP is a bundle of a series of pictures from an I picture to a next I picture, and may further include a P picture and B pictures (not shown). As described above, one picture corresponds to one AU.

In one illustrative aspect, the GOP heater 310 may include video depth information 330 of a plurality of AUs included in the GOP, like the video stream 300. As described above, the video depth information 330 includes depth values of a 3D video image or pixel movement distance values corresponding to the depth values of the 3D video image.

The video depth information 330 of the plurality of AUs is included in the GOP heater 310, in which a list of a plurality of depth values or a list of a plurality of pixel movement distance values may be included in the video depth information 330. The video depth information 330 may also include as a count value information regarding the number of depth values or the number of pixel movement distance values.

An image processing apparatus (not shown) may extract the video depth information 330 from the GOP heater 310, and identify the number of depth values or the number of pixel movement distance values using the count value included in the video depth information 330. The image processing apparatus may group the plurality of AUs included in the GOP into the number included in the video depth information 330, and adjust a depth value of a graphic screen that is reproduced being synchronized with the AUs included in each group using the depth values or the pixel movement distance values.

As an example, assuming that the GOP includes ten AUs, and the video depth information 330 includes five depth values. The image processing apparatus may group the ten AUs into the five depth values, and adjust the depth value of the graphic screen that is reproduced after being synchronized with the AUs included in each group by sequentially using the five depth values. That is, the image processing apparatus may adjust the depth value of the graphic screen that is reproduced after being synchronized with the AUs included in the first group using a first depth value of the five depth values. The image processing apparatus may also adjust the depth value of the graphic screen that is reproduced after being synchronized with the AUs included in the second group using a second depth value of the five depth values.

If the video information, 330 includes a list of the movement distance values, instead of the depth values, the image processing apparatus may convert the pixel movement distance values into corresponding depth values, and adjust the depth value of the graphic screen using the converted depth values.

As described above, according to an illustrative example, the video depth information 330 configured to adjust the depth value of the graphic screen reproduced with the AUs included in the GOP may be included in the GOP heater 310.

FIG. 4 is a block diagram illustrating an example of a video stream 400. Referring to FIG. 4, the video stream 400 includes one or more GOPs each including a plurality of AUs 410. Video depth information 440 could be included in one of the AUs 410 included in the GOP.

The AUs 410 may include slices that are a set of macro-blocks in which each of macro-blocks may be independently decoded. The AUs 410 may also include parameter sets that are information regarding setting and controlling of a decoder necessary for the slices, and SEI 420 including time information and additional information relating to screen presentation of decoded data. The SEI 420 is used in an application layer that utilizes a generally decoded image and is not included in all AUs 410.

The SEI 420 may include user data SEI messages 430 relating to additional information regarding a subtitle or a menu. According to an illustrative example, the SEI messages 430 may include the video depth information 440.

The video depth information 440 may include depth values of a 3D video image or pixel movement distance values corresponding to the depth values of the 3D video image. The video depth information 440 of the plurality of AUs may be included in one of the AUs 410 so that a list of a plurality of depth values or a list of a plurality of pixel movement distance values may be included in the video depth information 440. Information regarding the number of depth values or the number of pixel movement distance values may also be included as a count value in the video depth information 440.

An image processing apparatus (not shown) may extract the video depth information 440 from the SEI 420 of one of the AUs 410, and identify the number of depth values or the number of pixel movement distance values using the count value the video information, 440. The image processing apparatus may group the plurality of AUs 410 in one GOP into the number of depth values or the number of pixel movement distance values in the video depth information 440, and adjust a depth value of a graphic screen that is reproduced after being synchronized with the AUs in each group by sequentially using the depth values.

If the video depth information 440 includes a list of the movement distance values, instead of the depth values, the image processing apparatus may convert the pixel movement distance values into corresponding depth values, and adjust the depth value of the graphic screen using the converted depth values.

As described above, according to an illustrative example, the video depth information 440 configured to adjust the depth value of the graphic screen reproduced with the video image may be included in one of the AUs 410.

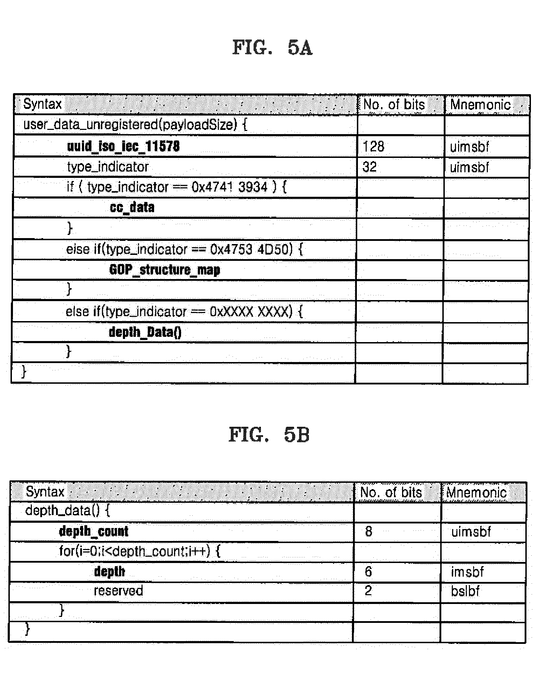

FIGS. 5A and 5B are tables illustrating an example of a syntax presenting video depth information included in a SEI message. Referring to FIG. 5A, a type indicator type_indicator included in the syntax indicates information included after the type indicator. If the type indicator type_indicator has a predetermined value in a third if clause, video depth information depth Data() follows the type indicator according to an illustrative example.

Referring to FIG. 5B, the syntax presents the video depth information depth Data(). The video depth information depth Data() includes depth values or pixel movement distance values. The syntax presents a count value depth_count indicating the number of depth values or the number of pixel movement distance values, and presents depth as video depth values or pixel movement distance values as much as the count value depth_count. Where the count value depth_count increases one at a time, that is, where a plurality of AUs are grouped into the count value depth_count, the syntax presents video depth values or pixel movement distance values are sequentially used, one at a time, for example, from a first group, to adjust a depth value of a graphic screen that is reproduced after being synchronized with the AUs included in each group.

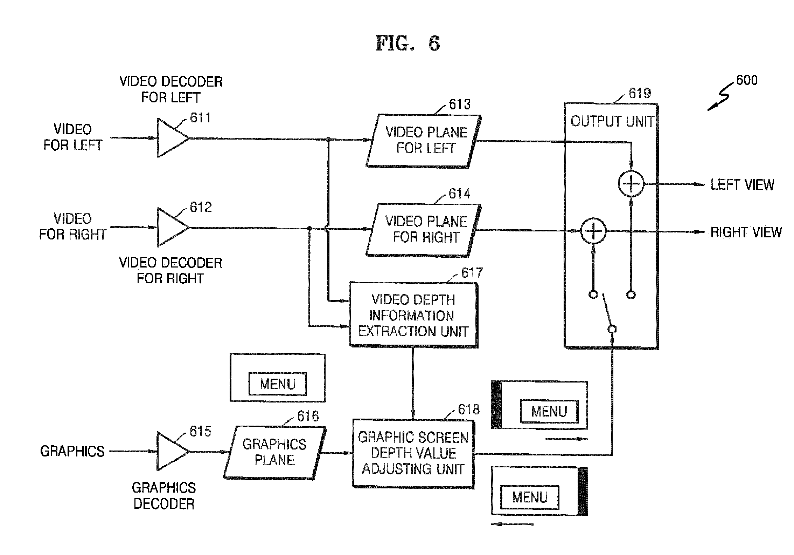

FIG. 6 is a block diagram illustrating an example of an image processing apparatus 600. Referring to FIG. 6, the image processing apparatus 600 includes a left eye video decoder 611, a right eye video decoder 612, a left eye video plane 613, a right eye video plane 614, a graphic decoder 615, a graphic plane 616, a video depth information extraction unit 617, a graphic screen depth value adjusting unit 618, and an output unit 619.

The left eye video decode 611 may decode a left eye video stream, and may transmit the decoded right eye video stream to the left eye video plans 613. The left eye video plans 613 may generate a left eye image using the decoded left eye video stream. The right eye video decoder 612 may decode a right eye video stream, and may transmit the decoded right eye video stream to the right eye video plans 614. The right eye video plane 614 may generate a right eye image using the decoded right eye video stream.

The left eye video plans 613 and the right eye video plans 614 may temporarily store the left eye image and the right eye image generated by the left eye video decoder 611 and the right eye video decoder 612, respectively.

The video depth information extraction unit 617 extracts video depth information from a video stream, that is, the decoded left eye video stream or the decoded right eye video stream including the video depth information.

The video depth information may be included in the video stream in various forms. For example, the video depth information may be included in each of a plurality of AUs included in the video stream, or video depth information regarding all AUs included in a GOP of the video stream may be included in one of the AUs. Alternatively, video depth information regarding the AUs included in the GOP of the video stream may be included in a header of the GOP. The video depth information may be included in user data SEI messages of SEI included in AUs.

The video depth information extraction unit 617 sends the video depth information extracted from the video stream to the graphic screen depth value adjusting unit 618.

The graphic decoder 615 decodes a graphic stream and transmits that decoded graphics stream to the graphic plans 616. The graphic plans 616 generates a graphic screen. The graphic plans 616 temporarily stores the graphic screen generated.

The graphic screen depth value adjusting unit 618 may adjust a depth value of the graphic screen to be equal to a depth value of a 3D video image, which is reproduced after being synchronized with the graphic screen, using the video depth information received from the video depth information extraction unit 617. In the alternative, the graphic screen depth value adjusting unit 618 may adjust a depth value of the graphic screen to be greater than the depth value of the 3D video image by as much as a predetermined depth value using the video depth information received from the video depth information extraction unit 617.

If the video depth information includes depth information regarding two or more of a plurality of objects included in a video image, which is reproduced after being synchronized with the graphic screen, the graphic screen depth value adjusting unit 618 may adjust the depth value of the graphic screen using a depth value or a pixel movement distance value of an object having the greatest depth value or the greatest pixel movement distance value among the two or more objects included in the video depth information.

In one example, the AUs may be divided into groups by a count value included in the video depth information. In this instance, the video depth information includes depth information regarding a plurality of frames other than one frame, that is, a plurality of AUs, the graphic screen depth value adjusting unit 618 may adjust the depth value of the graphic screen that is reproduced after being synchronized with the AU of each group to one of depth values included in the video depth information or one of pixel movement distance values corresponding to the depth values.

The graphic screen depth value adjusting unit 618 may generate a left eye graphic screen to be output with the left eye image and a right eye graphic screen to be output with the right eye image from the graphic screen generated in the graphic plane 616, using the depth values or the pixel movement distance values in the video depth information. The graphic screen depth value adjusting unit 618 may generate the left eye graphic screen and the right eye graphic screen by moving the whole graphic screen drawn in the graphic plans 616 left or right by the pixel movement distance values included in the video depth information or by a greater value than the pixel movement distance values. If the video depth information includes the depth values, the graphic screen depth value adjusting unit 618 may generate the left eye graphic screen and the right eye graphic screen by moving the whole graphic screen left or right by a predetermined distance in such a way that the graphic screen has a depth values equal to or greater than the depth values included in the video depth information.

In one example, the output unit 619 may simultaneously reproduce the left eye image generated in the left eye video plans 613 and the left eye graphic screen, and may simultaneously reproduce the right eye image generated in the right eye video plane 614 and the right eye graphic screen. The output unit 619 would alternately output the left eye image and the right eye image including the graphic screen and reproduce the 3D video image. In this regard, the graphic screen would have a greater depth value than the video image, so as to reproduce the video image and the graphic screen naturally.

The left eye video decoder 611, the right eye video decode 612, the left eye video plans 613, the right eye video plans 614, the graphic decode 615, the graphic plans 616, the video depth information extraction unit 617, the graphic screes depth value adjusting unit 618, and the output unit 619 described in FIG. 6 may be implemented using hardware and component, for example, processing devices. A processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, any create data in response to execution of the software. For purpose of simplicity, the description of a processing device is used as singular; however, one skilled in the art will appreciated that a processing device may include multiple processing elements and multiple types of processing elements. For example, a processing device include multiple processors or a processor and a controller. In addition, different processing configurations are possible, such a parallel processors.

Furthermore, the left eye video decode 611, the right eye video decode 612, the left eye video plans 613, the right eye video plane 614, the graphic decode 615, the graphic plans 616, the video depth information extraction unit 617, the graphic screen depth value adjusting unit 618, and the output unit 619 described in FIG. 6 may be implemented as individual structural components or one or more integrated structural components.

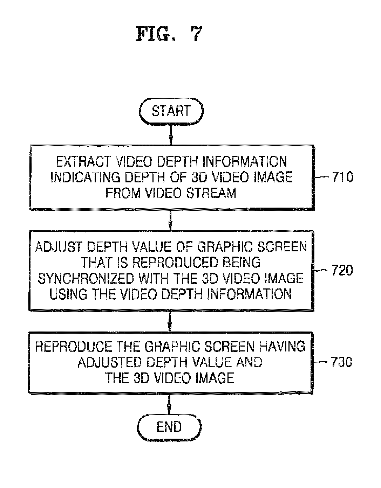

FIG. 7 is a flowchart illustrating an example an image processing method. Referring to FIG. 7, the image processing apparatus 600 of FIG. 6 extracts video depth information indicating a depth of a 3D video image from a video stream (operation 710). The image processing apparatus 600 may extract the video depth information from each of a plurality of AUs included in the video stream or extract the video depth information of the AUs from one of the AUs. Alternatively, the image processing apparatus 600 may extract the video depth information of the AUs included in a GOP from a header of the GOP.

In one aspect, an image processing apparatus includes a video decoder configured to decode a video stream and generating a left eye image and a right eye image. The image processing apparatus also includes a graphic decoder configured to decode a graphic stream and generating a graphic screen. The apparatus also includes a video depth information extraction unit configured to extract video depth information from the video stream. The apparatus further includes a graphic screen depth value adjusting unit configured to adjust a depth value of the graphic screen that is reproduced after being synchronized with the 3D video image using the video depth information, and configured to generate a left eye graphic screen and a right eye graphic screen from the graphic screen. The image processing apparatus also includes an output unit configured to simultaneously reproduce the left eye image and the left eye graphic screen, and configured to simultaneously reproduce the right eye image and the right eye graphic screen, and configured to alternately output the left eye image and the right eye image including the graphic screen and reproduce the 3D video imageThe video depth information may include depth values of the 3D video image or pixel movement distance values corresponding to the depth values of the 3D video image.

The image processing apparatus 600 adjusts a depth value of a graphic screen, being synchronized with the 3D video image, using the video depth information (operation 720). The image processing apparatus 600 may adjust the depth value of the graphic screen to be equal to or greater than the depth values of the 3D video image.

In one example, if the video depth information includes depth information regarding two or more of a plurality of objects included in a video image that is reproduced after being synchronized with the graphic screen, the image processing apparatus 600 may adjust the depth value of the graphic screen. The image processing apparatus 600 may adjust the depth value of the graphic screen using a depth value or a pixel movement distance value of an object having the greatest depth value or the greatest pixel movement distance value among the two or more objects included in the video depth information.

In another example, the AUs are divided into groups using a count value included in the video depth information. In this instance, if the video depth information includes information, of a plurality of AUs, the professing apparatus 600 may adjust the depth value of the graphic screen that is reproduced after being synchronized with the AU of each group to one of depth values included in the video depth information or one of pixel movement distance values corresponding to the depth values.

The image processing apparatus 600 may reproduce the graphic screen having the adjusted depth value and the 3D video image (operation 730).

It is to be understood that in the embodiment of the present invention, the operations in FIG. 7 are performed in the sequence and manner as shown although the order of some steps and the like may be changed without departing from the spirit and scope of the present invention. In accordance with an illustrative example, a computer program embodied on a non-transitory computer-readable medium may also be provided, encoding instructions to perform at least the method described in FIG. 7.

Program instructions to perform a method described in FIG. 7, or one or more operations thereof, may be recorded, stored, or fixed in one or more computer-readable storage media. The program instructions may be implemented by a computer. For example, the computer may cause a processor to execute the program instructions. The media may include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions, that is, software, may be distributed over network coupled computer systems so that the software is stored and executed in a distributed fashion. For example, the software and data may be stored by one or more computer readable recording mediums. Also, functional programs, codes, and code segments for accomplishing the example embodiments disclosed herein may be easily construed by programmers skilled in the art to which the embodiments pertain based on and using the flow diagrams and block diagrams of the figures and their corresponding descriptions as provided herein.

While this invention has been particularly shown and described with reference to preferred embodiments thereof, it will be understood by those of ordinary skill in the art that various changes in form and details may be made therein without departing from the spirit and scope of the invention as defined by the appended claims. The preferred embodiments should be considered in a descriptive sense only and not for purposes of limitation. Therefore, the scope of the invention is defined not by the detailed description of the invention but by the appended claims, and all differences within the scope will be construed as being included in the present invention.

## Claims

1. An image processing method, comprising:
extracting video depth information indicating a depth of a 3D video image from a video stream; and
adjusting a depth value of a graphic screen, to be synchronized with the 3D video image, using the video depth information.

2. The image processing method of claim 1, wherein the video depth information comprises depth values of the 3D video image or pixel movement distance values corresponding to the depth values of the 3D video image,
wherein the depth values increase from an inside of a screen to an outside of the screen on which a video image is output, and
wherein the adjusting of the depth value of the graphic screen comprises: adjusting the depth value of the graphic screen to be equal to or greater than the depth values of the 3D video image.

3. The image processing method of claim 2, wherein, where the 3D video image comprises a plurality of objects, and the video depth information comprises depth information regarding two or more of the plurality of objects, the adjusting of the depth value of the graphic screen comprises adjusting the depth value of the graphic screen to be equal to or greater than a depth value of an object having a greatest depth value among the two or more objects.

4. The image processing method of claim 2, wherein the video stream comprises a plurality of access units that are decoding units,
wherein the extracting of the video depth information comprises extracting the video depth information from each of the plurality of access units.

5. The image processing method of claim 4, wherein the adjusting of the depth value of the graphic comprise: adjusting the depth value of the graphic screen, to be synchronized with the plurality of access units from which the video depth information is extracted, using the extracted video depth information.

6. The image processing method of claim 4, wherein the extracting of the video depth information comprises extracting the video depth information from user data supplemental enhancement information (SEI) messages included in the SEI of the plurality of access units.

7. The image processing method of claim 2, wherein the video stream comprises one or more groups of pictures (GOPS) including a plurality of access units that are decoding units,
wherein the extracting of the video depth information comprises extracting the video depth information from one of the plurality of access units included in the one or more GOPs.

8. The image processing method of claim 7, wherein the extracting of the video information, comprises extracting the video depth information from user data supplemental enhancement information (SEI) messages included in the SEI of one of the plurality of access units.

9. The image processing method of claim 8, wherein the video depth information comprises a number of the depth values of the 3D video image or a number of the corresponding pixel movement distance values,
wherein the adjusting of the depth value of the graphic screen comprises where the plurality of access units included in the one or more GOPs are divided into groups by the number included in the video depth information, adjusting the depth value of the graphic screen, to be synchronized with the plurality of access units included in each group, using one of the depth values of the 3D video included in the video depth information or one of the corresponding pixel movement distance values.

10. The image processing method of claim 2, wherein the video stream comprises one or more groups of pictures (GOPs) including a plurality of access units that are decoding units,
wherein the extracting of the video depth information comprises extracting the video depth information from a header of the one or more GOPs.

11. The image processing method of claim 10, wherein the video depth information comprises a number of the depth values of the 3D video image or a number of the corresponding pixel movement distance values,
wherein the adjusting of the depth value of the graphic screen comprises: where the plurality of access units included in the one or more GOPs are divided into groups by the number included in the video depth information, adjusting the depth value of the graphic screen, to be synchronized with the plurality of access units included in each group, using one of the depth values of the 3D video image included in the video depth information or one of the corresponding pixel movement distance values.

12. An image processing apparatus, comprising:
a video decoder configured to decode a video stream and generate a left eye image and a right eye image;
a graphic decoder configured to decode a graphic stream and generate a graphic screen;
a video depth information extraction unit configured to extract video depth information indicating a depth of a 3D video image from the video stream; sand
a graphic screen depth value adjusting unit configured to adjust a depth value of the graphic screen to be synchronized with the 3D video image, using the video depth information.

13. The image processing apparatus of claim 12, wherein the video depth information comprises depth values of the 3D video image or pixel movement distance values corresponding to the depth values of the 3D video image,
wherein the depth values increase from an inside of a screen to an outside of the screen on which a video image is output, and
wherein the graphic screen depth value adjusting unit adjusts the depth value of the graphic screen to be equal to or greater than the depth values of the 3D video image.

14. The image processing apparatus of claim 13, wherein, where the 3D video image comprises a plurality of objects, and the video depth information comprises depth information regarding two or more of the plurality of objects, the graphic screen depth value adjusting unit adjusts the depth value of the graphic screen to be equal to or greater than a depth value of an object having a greatest depth value among the two or more objects.

15. The image processing apparatus of claim 13, wherein the video stream comprises a plurality of access units that are decoding units,
wherein the video depth information extraction unit extracts the video depth information from each of the plurality of access units.

16. The image professing apparatus of claim 15, wherein the video depth information extraction unit adjusts the depth value of the graphic screen, to be synchronized with the plurality of access units from which the video depth information is extracted, using the extracted video depth information.

17. The image processing method of claim 15, wherein the video depth information extraction unit extracts the video depth information from user data supplemental enhancement information (SEI) messages included in the SEI of the plurality of access units.

18. The image professing apparatus of claim 13, wherein the video stream comprises one or more groups of pictures (GOPS) including a plurality of access units that are decoding units,
wherein the video depth information extraction unit extracts the video depth information from one of the plurality of access units included in the one or more GOPs.

19. The image processing apparatus of claim 18, wherein the video depth information extraction unit extracts the video depth information from user data supplemental enhancement information (SEI) messages included in the SEI of one of the plurality of access units.

20. The image processing apparatus of claim 19, wherein the video depth information comprises a number of the depth values of the 3D video image or a number of the corresponding pixel movement distance values,
wherein the graphic screen depth value adjusting unit, where the plurality of access units included in the one or more GOPs are divided into groups by the number included in the video depth information, adjusts the depth value of the graphic screen, to be synchronized with the plurality of access units included in each group, using one of the depth values of the 3D video image included in the video depth information or one of the corresponding pixel movement distance values.

21. The image processing apparatus of claim 13, wherein the video stream comprises one or more groups of pictures (GOPs) including a plurality of access units that are decoding units,
wherein the video depth information extraction unit extracts the video depth information from a header of the one or more GOPs.

22. The image processing apparatus of claim 21, wherein the video depth information comprises a number of the depth values of the 3D video image or a number of the corresponding movement distance values,
wherein the graphic screen depth value adjusting unit, where the plurality of access units included in the one or more GOPs are divided into groups by the number included in the video depth information, adjusts the depth value of the graphic screen, to be synchronized with the plurality of access units included in each group, using one of the depth values of the 3D video image included in the video depth information or one of the corresponding pixel movement distance values.

23. A non-transitory computer readable recording medium having recorded thereon a program to execute an image processing method, the image processing method comprising:
extracting video depth information indicating a depth of a 3D video image from a video stream; and
adjusting a depth value of a graphic screen, to be synchronized with the 3D video image, using the video depth information.
